# EUROPEAN PATENT SPECIFICATION

(11) **EP 4 515 074 B1**
(45) Date of publication and mention of the grant of the patent: **25.03.2026**
(21) Application number: 23719774.4
(22) Date of filing: 18.04.2023
(51) Int. Cl.: E21B 33/035, E21B 47/117

(54) **SYSTEM AND METHOD FOR BARRIER TESTING**
SYSTEM UND VERFAHREN ZUR BARRIEREPRÜFUNG
SYSTÈME ET PROCÉDÉ D'ESSAI DE BARRIÈRE

(30) Priority: 28.04.2022 NO 20220478
(43) Date of publication of application: 05.03.2025
(73) Proprietor: TechnipFMC Norge AS, 3601 Kongsberg (NO)
(72) Inventor: MOE, Sigurd, 3601 Kongsberg (NO); SIEBYLA, Piotr, 3601 Kongsberg (NO)
(74) Representative: Murgitroyd & Company
(86) International application number: PCT/EP2023/059986
(87) International publication number: WO 2023/208647

(56) References cited:
- WO-A1-02/38912
- WO-A1-2012/148288
- WO-A1-2017/118727
- US-A1- 2020 018 134
- US-B2- 11 306 557
- US-B2- 9 702 212

## Description

### Technical Field

The present disclosure relates to a system and a method for barrier testing. More particularly, the present disclosure relates to a system and method for barrier testing barrier valves of a X-mas tree production system in the oil and gas industry.

### Background

Barriers, valves, in the oil and gas industry are required to be tested regularly to ensure barrier integrity. Such testing and frequency of testing is regulated and can be as often as once a month. The current practice for barrier testing valves in a X-mas tree production system is to use a separate service line in the umbilical between topside and subsea to set up the required pressure for the barrier testing. The pressure in the separate service line is controlled from the topside and is set higher or lower than the well shut in pressure. This creates a differential pressure that would decay if the valve barrier is not intact. This is detected by pressure transmitters of the subsea production system during the testing.

Commonly, the service line is filled with hydrate inhibitor such as mono ethylene glycol (MEG). In long distance gas fields, MEG is injected continuously as a hydrate inhibitor. Current practice is to implement two MEG filled lines, one for the hydrate inhibition function and one to act as the separate service line, the latter where the pressure is manipulated for pressure testing. To have two MEG lines adds cost, but is required today since the pressure of the main hydrate inhibitor line for continuous injection cannot be manipulated without all the wells connected to the main hydrate inhibitor line operationally having to be shut-in.

A problem is that the barrier testing takes place subsea, possibly at several thousand meters dept. A further technical problem is that any part of a solution must function with new and existing subsea production systems, and must function without a possibility to fail, fulfil technical and legal requirements, and is easy to use. It is desirable that any solution is simple, not expensive to produce, and is reliable. It is further a technical problem to avoid cumbersome arrangements that are expensive to manufacture or assemble. It is desirable that any part of the solution, or at least some parts of the solution, can be retrieved or interchanged. US2020/018134A1, US8322427B2 and NO20150403A may be useful for understanding the background.

### Summary of the Invention

It is an object of the present invention to provide a system and a method for barrier testing of a X-mas tree production system. This object can be achieved by the features as defined by the independent claims. Further enhancements are characterized by the dependent claims. The invention is defined by the claims. The system and the method for barrier testing may be used for any other subsea valve configuration that needs barrier testing.

The invention eliminates the need for the service line for individual well barrier testing, while for example continuous MEG injection can be maintained. The claimed set-up of a pressure increasing unit, fluid lines, and valves core of the invention is a pressure intensifier (for example a subsea pump) and valve set-up where fluid may be tapped off a service line, for example the main MEG line for hydrate inhibition, and vented to a line or a fluid receiving unit (for example a container with lower pressure). The claimed system and method enables the manipulation of pressure for barrier testing, i.e. to set up the differential pressure required for barrier testing, in the same way as if pressure was from the topside via the service line for individual well barrier testing.

Embodiments may also support solving subsea production operational challenges such as reduction of well pressure for well startup, discharge of MEG into flowline, vent of annulus, pressure release to melt hydrate plugs, to set up a bullheading pressure higher than pipeline pressure, etc. Embodiments may eliminate umbilical annulus bleed lines, common per well or per template for production wells and water injection wells.

According to one embodiment, a system for barrier testing of a X-mas tree production system is disclosed. The X-mas tree is subsea and comprises a fluid line (330) between a set of two barrier valves (310,320), one of the barrier valves of the set of two barrier valves being an upstream barrier valve (320) closer to a reservoir (400) and the other barrier valve being a downstream barrier valve (310) closer to an environment, and pressure monitoring devices (180, 380) in the fluid line (330) and downstream of the downstream barrier valve (310). The system provides fluid at different test pressures to the fluid line (330) between the downstream barrier valve (310) and the upstream barrier valve (320). The system comprises a first fluid connection line (101) from a fluid source (200) to a pressure increasing unit (160), with a first valve (110) positioned in the first fluid connection line (101). The system comprises a second fluid connection line (102) from the pressure increasing unit (160) to a first connection point (332) on the fluid line (330) between the downstream barrier valve (310) and the upstream barrier valve (320), with a second valve (120) positioned in the second fluid connection line (102). The system comprises a third fluid connection line (103) from a fluid receiving unit (170) to a second connection point (122) on the second fluid connection line (102), the second connection point (122) being between the second valve (120) and the first connection point (332), with a third valve (130) positioned in the third fluid connection line (103), such that fluid at the different test pressures may be provided to the fluid line (330) between the barrier valves (310, 320) for testing of the barrier valves (310, 320).

According to one embodiment, the system may comprise a fourth fluid connection line (104) from a third connection point (112) to the second connection point (122), the third connection point (112) being on the first connection line (101) and between the pressure increasing unit (160) and the first valve (110), with a fourth valve (140) positioned in the fourth fluid connection line (104).

According to one embodiment, the pressure increasing unit (160) may comprise a pump for pumping fluid in only one direction from the pump (160) towards the second valve (120).

According to one embodiment, the system may further comprise a fluid connection drain line (162) from the pressure increasing unit (160) to a production flow line (250), with a check valve (164) positioned in the fluid connection drain line (162) only allowing fluid to flow from the pressure increasing device (160) to the production flow line (250).

According to one embodiment, the system may further comprising a filter (190) positioned in the first fluid connection line (101). The system may be arranged on a subsea X-mas tree, or on or in a manifold, or on a skid. The system may be arranged separately from, and fluidly connected to, the X-mas tree production system (300).

According to one embodiment, the pressure increasing unit (160) may be a battery driven pump, or a hydraulically driven pump, and the pressure increasing unit (160) is retrievable. According to one embodiment, the first fluid source (200) may be a service line.

According to at least one embodiment, a method for barrier testing of a X-mas tree production system according to any one of the preceding embodiments, for testing with a test pressure above a pressure of the reservoir (400), is disclosed. The method comprises open the first valve (110), open the second valve (120), close the third valve (130), close the fourth valve (140), and use the pressure increasing unit (160) to increase the fluid test pressure in the fluid line (330) to the desired barrier test pressure value, using fluid from the first source (200).

According to at least one embodiment, a method for barrier testing of a X-mas tree production system according to any one of the preceding embodiments, for testing with a test pressure below a pressure of the reservoir (400), is disclosed. The method comprises close the first valve (110), open the third valve (130), and use the fluid receiving unit (170) to reduce the fluid pressure in the fluid line (330) to the desired barrier test pressure value. An alternatively to this method is to close the second valve (120), close the fourth valve (140), open the third valve (130), and use the fluid receiving unit (170) to reduce the fluid pressure in the fluid line (330) to the desired barrier test pressure value.

According to at least one embodiment, a method for barrier testing a master valve (320), the master valve being the upstream barrier valve (320), is disclosed. The method comprises closing the master valve (320), open the first valve (110), open the second valve (120), close the third valve (130), close the fourth valve (140), close the downstream barrier valve (310), and use the pressure increasing unit (160) to increase the fluid test pressure to the desired barrier test pressure value for the master valve (320), keep the pressure for a predetermined time period and check the pressure monitoring devices (380) in the fluid line (330) to detect pressure changes. This method for barrier testing a master valve may be a method for testing with a test pressure above a pressure of the reservoir (400).

According to at least one embodiment, a method for barrier testing a wing valve (310), the wing valve being the downstream barrier valve (310), is disclosed. The method comprises closing the wing valve (310), open the first valve (110), open the second valve (120), close the third valve (130), close the fourth valve (140), close the upstream barrier valve (320), and use the pressure increasing unit (160) to increase the fluid test pressure to the desired barrier test pressure value for the wing valve (310), keep the pressure for a predetermined time period and check the pressure monitoring devices (380) in the fluid line (330) to detect pressure changes. This method for barrier testing a wing valve may be a method for testing with a test pressure above a pressure of the reservoir (400).

According to at least one embodiment, the method may further comprise to initially flush the system by, open the first valve (110), close the second valve (120), close the third valve (130), open the fourth valve (140), and vent via the X-mas tree (300) or via an annulus of the reservoir (400).

According to at least one embodiment, the pressure increasing unit (160) may use fluid from the first fluid source (200), the first fluid source being a service line (200).

At least one of the above embodiments provides a system and method for testing if barrier valves are intact, and one or more solutions to the problems and disadvantages with the background art. Other technical advantages of the present disclosure will be readily apparent to one skilled in the art from the following description and claims. Various embodiments of the present application obtain only a subset of the advantages set forth. No one advantage is critical to the embodiments. Any claimed embodiment may be technically combined with any other claimed embodiment or embodiments.

### Brief Description of the Drawing

The accompanying drawing illustrate presently exemplary embodiments of the disclosure and serve to explain, by way of example, the principles of the disclosure.

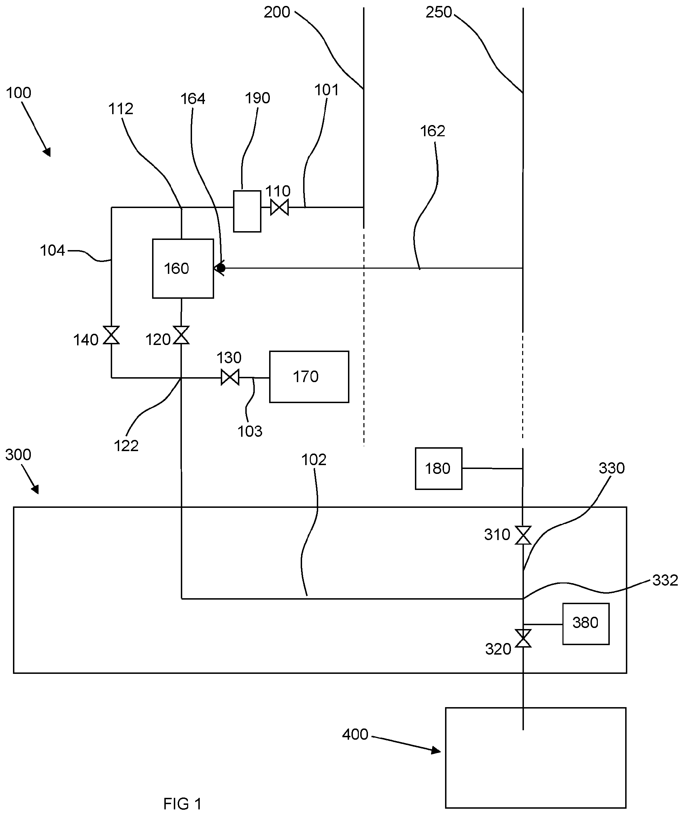

Fig 1 is a diagrammatic illustration of a system for barrier testing according to an exemplary embodiment of the disclosure.

### Detailed Description

Fig 1 is a diagrammatic illustration of a system for barrier testing of a X-mas tree production system (300). The X-mas tree production system (300) may be connected to a reservoir (400) in the usual manner, for example to a well (400) or to the tubing hanger (400). A production line (250) may extend from the X-mas tree production system (300) to the topside. A fluid source (200), for example a service line (200), may also extend from the X-mas tree production system (300) to the topside. The system in Fig 1 may be a subsea hydrocarbon production system, for example for oil or gas.

The system is for barrier testing of a X-mas tree production system (300), where the X-mas tree is subsea and comprises a fluid line (330). The fluid line (330) is between a set of two barrier valves (310,320). One of the barrier valves of the set of two barrier valves being an upstream barrier valve (320) closer to a reservoir (400) and the other barrier valve being a downstream barrier valve (310) closer to an environment. The upstream barrier valve (320) may for example be a master valve (320), and the downstream barrier valve (310) may be for example a wing valve (310). The X-mas tree also comprises pressure monitoring devices (180, 380) in the fluid line (330) and downstream of the downstream barrier valve (310). One or more of the pressure monitoring devices (180) is in the fluid line (330) and one or more of the pressure monitoring devices (380) is downstream of the downstream barrier valve (310). In this way different pressures may be monitored within the X-mas tree and the X-mas tree production system (300). The system provides fluid at different test pressures to the fluid line (330) between the downstream barrier valve (310) and the upstream barrier valve (320). Hereby at least the downstream barrier valve (310) and the upstream barrier valve (320) can be barrier tested. Other valves, sealing, or fluid lines within the X-mas tree production system may also be barrier tested.

The system comprises a first fluid connection line (101) from a fluid source (200) to a pressure increasing unit (160). The first fluid connection line (101) may allow fluid to be channelled between the fluid source (200) and the pressure increasing unit (160). The system also comprises a first valve (110) positioned in the first fluid connection line (101). The first valve (110) may be opened or closed and control fluid channelled in the first fluid connection line (101) between the fluid source (200) and the pressure increasing unit (160). The fluid source (200) may be a service line, for example for MEG, from the topside to the X-mas tree production system (300).

The system comprises a second fluid connection line (102) from the pressure increasing unit (160) to a first connection point (332). The first connection point (332) is on the fluid line (330) between the downstream barrier valve (310) and the upstream barrier valve (320). The second fluid connection line (102) may allow fluid to be channelled between the pressure increasing unit (160) and the first connection point (332). The system also comprises a second valve (120) positioned in the second fluid connection line (102). The second valve (120) may be opened or closed and control fluid channelled in the second fluid connection line (102) between the pressure increasing unit (160) and the first connection point (332).

The system comprises a third fluid connection line (103) from a fluid receiving unit (170) to a second connection point (122). The second connection point (122) is on the second fluid connection line (102). The second connection point (122) is positioned between the second valve (120) and the first connection point (332). The third fluid connection line (103) may allow fluid to be channelled between the fluid receiving unit (170) and the second connection point (122). The system comprises a third valve (130) positioned in the third fluid connection line (103). The third valve (130) may be opened or closed and control fluid channelled in the third fluid connection line (103) between the fluid receiving unit (170) and the second connection point (122). The fluid receiving unit (170) may, for example, be an accumulator. The fluid receiving unit (170) may be able to receive pressurised fluid and subsequently, in a controlled manner from the topside, return the received pressurised fluid via the third fluid connection line (103).

The system is arranged such that fluid at the different test pressures may be provided to the fluid line (330) between the barrier valves (310, 320) for testing of the barrier valves (310, 320). By arranging the fluid connection lines, the valves, the pressure increasing unit (160), and the fluid receiving unit (170) as described, the two barrier valves may be tested if they are intact. Instead of having to use a dedicated service line for testing, an existing fluid source may be used. With the system, test pressures may be set different, higher or lower, than the well, the reservoir (400), the shut-in pressure. This creates a differential pressure that would decay if the barrier valves are not intact. The decay may be monitored by the pressure monitoring devices (180, 380) of the system during the testing. This is also further described below.

According to one embodiment, and as illustrated in Fig 1, the system may further comprise a fourth fluid connection line (104) from a third connection point (112) to the second connection point (122). The fourth fluid connection line (104) may allow fluid to be channelled between the third connection point (112) and the second connection point (122). The third connection point (112) is on the first connection line (101) and is between the pressure increasing unit (160) and the first valve (110). The system may comprise a fourth valve (140) positioned in the fourth fluid connection line (104). The fourth valve (140) may be opened or closed and control fluid channelled in the fourth fluid connection line (104) between the third connection point (112) and the second connection point (122). The arrangement may be such that the fourth valve (140) is in parallel to a series of the pressure increasing unit (160) and the second valve (120). The fourth fluid connection line (104) and the fourth valve (140) may be preferably used for venting, flushing, before barrier testing, but in other tests, for example involving increasing or reducing pressure, the fourth fluid connection line (104) and the fourth valve (140) may not be necessary.

According to one embodiment, the pressure increasing unit (160) may comprise a pump (160) for pumping fluid in only one direction from the pump towards the second valve (120). This allows the system to be a functional and robust system with a low possibility of malfunction. The pressure increasing unit (160) may be retrievable. The pressure increasing device (160) may be a pump driven by electricity, or driven by the fluid from the fluid source (200), for example a service flow line, or be a pressure intensifier creating a higher pressure by different diameter pistons at inlet and outlet sides.

The pressure increasing unit (160) and/or the associated valves may be part of a separately retrievable unit, or may be part of a remotely operated vehicle, ROV, skid systems with local hydraulic power generation. For an electrically powered pressure increasing unit (160), as the testing and hence pressure increasing, pumping, is required only intermittently, electric power to the pressure increasing unit (160) may be stored in batteries subsea, providing a solution that allows an all-electric subsea systems and eliminates the need for a subsea infrastructure designed for a peak power demand.

According to one embodiment, the system may further comprise a fluid connection drain line (162) from the pressure increasing unit (160) to a production flow line (250), with a check valve (164) positioned in the fluid connection drain line (162) only allowing fluid to flow from the pressure increasing device (160) to the production flow line (250). The fluid connection drain line (162) allows for the system to be drained by the pressure increasing device (160) expelling fluid out from the system, for example to the production flow line (250). The check valve (164) may be controllable, for example from the topside. The check valve (164) may be controlled to closed or opened. The fluid connection drain line (162) and the check valve (164) may be arranged such that operating the pressure increasing unit (160) does not pump or direct fluid through the fluid connection drain line (162) and the check valve (164).

According to one embodiment, the system may further comprise a filter (190) positioned in the first fluid connection line (101). Preferably the filter (190) may be positioned in the first fluid connection line (101) between the first valve (110) and the third connection point (112). The filter (190) may allow the fluid to pass but stop any other contaminations. The filter (190) may be retrievable.

According to one embodiment, the system may be arranged on a subsea X-mas tree, or on or in a manifold, or on a separate skid. The system may be added to an already existing X-mas tree production system (300), or the system may be incorporated to a new X-mas tree production system (300). According to one embodiment, one or more elements of the system may be arranged on a subsea X-mas tree, or on or in a manifold, or on a skid. The system may be a separate system added to a X-mas tree production system (300).

According to one embodiment, the system may be arranged separately from, and fluidly connected to, the X-mas tree production system (300). The system may be separately arranged on a skid and placed next to the X-mas tree production system (300). The system may be only fluidly connected to the X-mas tree production system (300). The fluid connection may be done with the second fluid connection line (102) from the pressure increasing unit (160) to the first connection point (332) on the fluid line (330) between the downstream barrier valve (310) and the upstream barrier valve (320). The system may be connected to one or more X-mas trees or other valves systems where regular barrier testing is required or operationally beneficial.

According to one embodiment, the pressure increasing unit (160) may be a battery driven pump, or a hydraulically driven pump, or a pressure intensifier. The hydraulically driven pump may be driven from, for example, hydrate inhibitor, hydraulic fluid, or injection water. The pressure increasing unit (160) may be retrievable. The pressure increasing unit (160) may be removably connected to the system, such that it can be retrieved, for example by a remotely operated vehicle (ROV). This allows the pressure increasing unit (160) to be exchanged or serviced.

According to one embodiment of the system described herein may be configured to be retrievable. The four fluid connection lines (101, 102, 103, 104), the pressure increasing unit (160), the fluid receiving unit (170), the filter (190), the first valve (110), the second valve (120), the third valve (130), and the fourth valve (140) may all be retrievable, independently or together. The pressure increasing unit (160) and the filter (190) may be each separately and independently retrievable from the rest. This may require further valves before and after the pressure increasing unit (160) and the filter (190).

According to one embodiment, the first fluid source (200) may be a service line, such as a service line for fluid from the topside to the X-mas tree production system (300). Preferably the first fluid source (200) is a service line to the X-mas tree, such as a service line providing mono ethylene glycol (MEG), or methanol, ethanol, scale inhibitor, or water. This may also be the fluid used for testing the barriers. This allows an existing service line to be used for barrier testing instead of requiring a separate fluid line for barrier testing.

According to one embodiment, the system for barrier testing of a X-mas tree production system (300) does not comprise, or require, any further element or elements. The system may need no further valves, fluid connection lines, pressure increasing units, fluid receiving unit, or any other element, for realizing the system for barrier testing of a X-mas tree production system. According to one embodiment of the system described herein, the four fluid connection lines (101, 102, 103, 104) connect the pressure increasing unit (160), the fluid receiving unit (170), the filter (190), the first valve (110), the second valve (120), the third valve (130), and the fourth valve (140) directly to each other as described herein, excluding other elements. According to one embodiment, there are no further fluid connection lines between the pressure increasing unit (160), the fluid receiving unit (170), the first valve (110), the second valve (120), the third valve (130), and the fourth valve (140).

According to one embodiment, all the valves (110, 120, 130, 140) are remotely controllable so that the valves may be opened or closed according to instructions from the topside. According to one embodiment, the pressure increasing device (160) and/or the fluid receiving unit (170) are remotely controllable so that they may be operated according to instructions from the topside. The pressure monitoring devices (180, 380) may be remotely readable, such that their monitored pressure may be taken at the topside. The valves (110, 120, 130, 140), the pressure increasing device (160) and/or the fluid receiving unit (170) may in addition be remotely controllable by using a ROV. The pressure monitoring devices (180, 380) may in addition be remotely readable by using a ROV. The valves required for barrier testing may be remotely controllable with local back-up, for example local ROV back-up. The valves required for system replacement may be controlled locally by a ROV during replacement.

A method for barrier testing with the system according to any one of the embodiments described herein, or any combination of embodiments described herein, is disclosed. The method sets out opened or closed positions of the valves (110, 120, 130, 140) and how the pressure increasing unit (160) and the fluid receiving unit (170) are operated to test if the barrier valves are intact or leak. This allows the system to provide fluid at different test pressures to the fluid line (330) between the downstream barrier valve (310) and the upstream barrier valve (320).

Described is a method for barrier testing with the system according to any one of the embodiments described herein, or any combination of embodiments described herein, for testing with a test pressure above a pressure of the reservoir (400). That is for testing the barrier valves with a higher pressure than the well shut in pressure, for example at a higher pressure than the pressure in the production line (250). The method comprises to open the first valve (110), open the second valve (120), close the third valve (130), close the fourth valve (140), and use the pressure increasing unit (160) to increase the fluid test pressure in the fluid line (330) to the desired barrier test pressure value, using fluid from the first source (200). In this way the test pressure is increased to the selected test pressure in the fluid line (330). The test pressure is then held at this level and since the downstream barrier valve (310) and the upstream barrier valve (320) are closed, a change, for example a decrease, in the pressure level detected by the pressure monitoring device (380) indicates that the barrier valves are not intact. In the embodiment where the fourth valve (140) and the fourth fluid connection line (104) are not present, then the method is the same since the fluid can not pass in parallel to the series of the pressure increasing unit (160) and the second valve (120).

Described is a method for barrier testing with the system according to any one of the embodiments described herein, or any combination of embodiments described herein, for testing with a test pressure below a pressure of the reservoir (400). That is for testing the barrier valves with a lower pressure than the well shut in pressure, for example at a lower pressure than the pressure in the production line (250). The method comprises to close the first valve (110), open the third valve (130), and use the fluid receiving unit (170) to reduce the fluid pressure in the fluid line (330) to the desired barrier test pressure value; alternatively close the second valve (120), close the fourth valve (140), open the third valve (130), and use the fluid receiving unit (170) to reduce the fluid pressure in the fluid line (330) to the desired barrier test pressure value. Fluid within the fluid line (330) is received by the fluid receiving unit (170) and such transfer of fluid reduces the pressure within the X-mas tree production system (300). Both alterative valve positions achieve this. In this way the test pressure is reduced to the selected test pressure in the fluid line (330). The test pressure is then held at this level and since the downstream barrier valve (310) and the upstream barrier valve (320) are closed, a change, for example an increase, in the pressure level detected by the pressure monitoring device (380) indicates that the barrier valve are not intact.

According to one embodiment, the method may include testing a master valve (320). Described is a method according to any one of the embodiments described herein, or any combination of embodiments described herein, for barrier testing a master valve (320). In Fig 1 the master valve is the upstream barrier valve (320). The method comprises close the master valve (320), open the first valve (110), open the second valve (120), close the third valve (130), close the fourth valve (140), close the downstream barrier valve (310), and use the pressure increasing unit (160) to increase the fluid test pressure to the desired barrier test pressure value for the master valve (320). Then keep the pressure for a predetermined time period and check the pressure monitoring devices (380) in the fluid line (330) to detect pressure changes during the predetermined time period. If a pressure decrease is detected, then the master valve (320) is not intact. Instead of closing the downstream barrier valve (310), any other valve in the X-mas tree production system (300) may be used to keep the test pressure for testing the master valve (320).

According to one embodiment, the method may include testing a wing valve (310). Described is a method according to any one of the embodiments described herein, or any combination of embodiments described herein, for barrier testing a wing valve (310). In Fig 1 the wing valve is the downstream barrier valve (310). The method comprises close the wing valve (310), open the first valve (110), open the second valve (120), close the third valve (130), close the fourth valve (140), close the upstream barrier valve (320), and use the pressure increasing unit (160) to increase the fluid test pressure to the desired barrier test pressure value for the wing valve (310). Then keep the pressure for a predetermined time period and check the pressure monitoring devices (380) in the fluid line (330) to detect pressure changes during the predetermined time period. If a pressure decrease is detected, then the wing valve (310) is not intact. Instead of closing the upstream barrier valve (320), any other valve in the X-mas tree production system (300) may be used to keep the test pressure for testing the wing valve (310).

According to one embodiment, the method may include initially flushing the X-mas tree production system (300). Described is a method according to any one of the embodiments described herein, or any combination of embodiments described herein, for initially flushing the system. The method comprises to initial flush the system by, open the first valve (110), close the second valve (120), close the third valve (130), open the fourth valve (140), and vent via the X-mas tree or via an annulus of the reservoir (400). The system for barrier testing and the X-mas tree production system (300) may thus be flushed via the X-mas tree or via an annulus of the reservoir (400). In this way the X-mas tree production system (300) may be flushed from anything that would influence the barrier testing, such as for example a gas in a liquid. According to one embodiment, the system described herein, the four fluid connection lines (101, 102, 103, 104), the pressure increasing unit (160), the fluid receiving unit (170), the first valve (110), the second valve (120), the third valve (130), and the fourth valve (140), are flushed in this way to remove anything that would influence the barrier testing. This step may preferably be taken before the method steps described above, or any combination thereof.

According to one embodiment, the method may include using fluid from the first fluid source (200). Described is a method according to any one of the embodiments described herein, or any combination of embodiments described herein, using fluid from the first fluid source (200). The method comprises that the pressure increasing unit (160) uses fluid from the first fluid source (200). Preferably the first fluid source is a service line (200). Preferably the first fluid source (200) is a service line to the X-mas tree, such as a service line providing mono ethylene glycol (MEG), or methanol, ethanol, scale inhibitor, or water.

At least one embodiment described herein support solving subsea production operational challenges such as reduction of well pressure for well start-up, discharge of MEG into flowline, vent of annulus, pressure release to melt hydrate plugs, to set up a bullheading pressure higher than pipeline pressure, etc. At least one embodiment described herein may eliminate umbilical annulus bleed lines, common per well or per template for production wells and water injection wells.

This written description uses examples to disclose the invention, including the best mode, and also to enable any person skilled in the art to practice the invention, including making and using the system and performing the methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. System for barrier testing of a X-mas tree production system (300), where the X-mas tree is subsea and comprises a fluid line (330) between a set of two barrier valves (310,320), one of the barrier valves of the set of two barrier valves being an upstream barrier valve (320) closer to a reservoir (400) and the other barrier valve being a downstream barrier valve (310) closer to an environment, and a pressure monitoring device (380) in the fluid line (330) and a pressure monitoring device (180) downstream of the downstream barrier valve (310), the system providing fluid at different test pressures to the fluid line (330) between the downstream barrier valve (310) and the upstream barrier valve (320), **characterised in that** the system comprises
a first fluid connection line (101) from a fluid source (200) to a pressure increasing unit (160), with a first valve (110) positioned in the first fluid connection line (101);
a second fluid connection line (102) from the pressure increasing unit (160) to a first connection point (332) on the fluid line (330) between the downstream barrier valve (310) and the upstream barrier valve (320), with a second valve (120) positioned in the second fluid connection line (102); and
a third fluid connection line (103) from a fluid receiving unit (170) to a second connection point (122) on the second fluid connection line (102), the second connection point (122) being between the second valve (120) and the first connection point (332), with a third valve (130) positioned in the third fluid connection line (103), such that fluid at the different test pressures may be provided to the fluid line (330) between the barrier valves (310, 320) for testing of the barrier valves (310, 320).

2. The system according to claim 1, further comprising a fourth fluid connection line (104) from a third connection point (112) to the second connection point (122), the third connection point (112) being on the first connection line (101) and between the pressure increasing unit (160) and the first valve (110), with a fourth valve (140) positioned in the fourth fluid connection line (104).

3. The system according to claim 1 or 2, wherein the pressure increasing unit (160) comprises a pump for pumping fluid in only one direction from the pump (160) towards the second valve (120).

4. The system according to any one of the preceding claims, further comprising a fluid connection drain line (162) from the pressure increasing unit (160) to a production flow line (250), with a check valve (164) positioned in the fluid connection drain line (162) only allowing fluid to flow from the pressure increasing device (160) to the production flow line (250).

5. The system according to any one of the preceding claims, further comprising a filter (190) positioned in the first fluid connection line (101).

6. The system according to any one of the preceding claims, wherein the system is arranged on the subsea X-mas tree, or on or in a manifold, or on a skid.

7. The system according to any one of the preceding claims, wherein the system is arranged separately from, and fluidly connected to, the X-mas tree production system (300).

8. The system according to any one of the preceding claims, wherein the pressure increasing unit (160) is a battery driven pump, or a hydraulically driven pump, and the pressure increasing unit (160) is retrievable.

9. The system according to any one of the preceding claims, wherein the first fluid source (200) is a service line.

10. Method for barrier testing with the system according to any one of the preceding claims 2 to 9, for testing with a test pressure above a pressure of the reservoir (400), the method being **characterised by** comprising:
open the first valve (110), open the second valve (120), close the third valve (130), close the fourth valve (140), and use the pressure increasing unit (160) to increase the fluid test pressure in the fluid line (330) to the desired barrier test pressure value, using fluid from the first source (200).

11. Method for barrier testing with the system according to any one of the preceding claims 2 to 9, for testing with a test pressure below a pressure of the reservoir (400), the method being **characterised by** comprising:
close the first valve (110), open the third valve (130), and use the fluid receiving unit (170) to reduce the fluid pressure in the fluid line (330) to the desired barrier test pressure value; alternatively
close the second valve (120), close the fourth valve (140), open the third valve (130), and use the fluid receiving unit (170) to reduce the fluid pressure in the fluid line (330) to the desired barrier test pressure value.

12. The method according to claim 10, wherein for barrier testing a master valve (320), the master valve being the upstream barrier valve (320), the method further comprises close the master valve (320), open the first valve (110), open the second valve (120), close the third valve (130), close the fourth valve (140), close the downstream barrier valve (310), and use the pressure increasing unit (160) to increase the fluid test pressure to the desired barrier test pressure value for the master valve (320), keep the pressure for a predetermined time period and check the pressure monitoring devices (380) in the fluid line (330) to detect pressure changes.

13. The method according to claim 10, wherein for barrier testing a wing valve (310), the wing valve being the downstream barrier valve (310), the method further comprises close the wing valve (310), open the first valve (110), open the second valve (120), close the third valve (130), close the fourth valve (140), close the upstream barrier valve (320), and use the pressure increasing unit (160) to increase the fluid test pressure to the desired barrier test pressure value for the wing valve (310), keep the pressure for a predetermined time period and check the pressure monitoring devices (380) in the fluid line (330) to detect pressure changes.

14. The method according to any one of the preceding claims 10 to 13, wherein the method further comprises to initially flush the system by, open the first valve (110), close the second valve (120), close the third valve (130), open the fourth valve (140), and vent via the X-mas tree (300) or via an annulus of the reservoir (400).

15. The method according to any one of the preceding claims 10 to 14, wherein the pressure increasing unit (160) uses fluid from the first fluid source (200), the first fluid source being a service line (200).

## Patentansprüche

1. Ein System zur Absperrungsprüfung eines E-Kreuz-Fördersystems (300), wobei das E-Kreuz unter Wasser ist und Folgendes beinhaltet: eine Fluidleitung (330) zwischen einem Satz von zwei Absperrarmaturen (310, 320), wobei eine der Absperrarmaturen des Satzes von zwei Absperrarmaturen eine stromaufwärts gelegene Absperrarmatur (320) ist, die näher an einer Lagerstätte (400) ist, und die andere Absperrarmatur eine stromabwärts gelegene Absperrarmatur (310) ist, die näher an einer Umwelt ist, und eine Drucküberwachungsvorrichtung (380) in der Fluidleitung (330) und eine Drucküberwachungsvorrichtung (180) stromabwärts der stromabwärts gelegenen Absperrarmatur (310), wobei das System der Fluidleitung (330) zwischen der stromabwärts gelegenen Absperrarmatur (310) und der stromaufwärts gelegenen Absperrarmatur (320) Fluid mit unterschiedlichen Prüfdrücken bereitstellt, **dadurch gekennzeichnet, dass** das System Folgendes beinhaltet:
eine erste Fluidverbindungsleitung (101) von einer Fluidquelle (200) zu einer Druckerhöhungseinheit (160), wobei eine erste Armatur (110) in der ersten Fluidverbindungsleitung (101) positioniert ist;
eine zweite Fluidverbindungsleitung (102) von der Druckerhöhungseinheit (160) zu einem ersten Verbindungspunkt (332) an der Fluidleitung (330) zwischen der stromabwärts gelegenen Absperrarmatur (310) und der stromaufwärts gelegenen Absperrarmatur (320), wobei eine zweite Armatur (120) in der zweiten Fluidverbindungsleitung (102) positioniert ist; und
eine dritte Fluidverbindungsleitung (103) von einer Fluidaufnahmeeinheit (170) zu einem zweiten Verbindungspunkt (122) an der zweiten Fluidverbindungsleitung (102),
wobei der zweite Verbindungspunkt (122) zwischen der zweiten Armatur (120) und dem ersten Verbindungspunkt (332) liegt, wobei eine dritte Armatur (130) in der dritten Fluidverbindungsleitung (103) positioniert ist, sodass der Fluidleitung (330) zwischen den Absperrarmaturen (310, 320) Fluid mit den unterschiedlichen Prüfdrücken zum Prüfen der Absperrarmaturen (310, 320) bereitgestellt werden kann.

2. System gemäß Anspruch 1, das ferner eine vierte Fluidverbindungsleitung (104) von einem dritten Verbindungspunkt (112) zu dem zweiten Verbindungspunkt (122) beinhaltet, wobei der dritte Verbindungspunkt (112) an der ersten Verbindungsleitung (101) und zwischen der Druckerhöhungseinheit (160) und der ersten Armatur (110) liegt, wobei eine vierte Armatur (140) in der vierten Fluidverbindungsleitung (104) positioniert ist.

3. System gemäß Anspruch 1 oder 2, wobei die Druckerhöhungseinheit (160) eine Pumpe zum Pumpen von Fluid in nur einer Richtung von der Pumpe (160) zu der zweiten Armatur (120) beinhaltet.

4. System gemäß einem der vorhergehenden Ansprüche, das ferner eine Fluidverbindungsablaufleitung (162) von der Druckerhöhungseinheit (160) zu einer Förderflussleitung (250) beinhaltet, wobei eine Rückschlagarmatur (164), die in der Fluidverbindungsablaufleitung (162) positioniert ist, nur Fluid von der Druckerhöhungsvorrichtung (160) zu der Förderflussleitung (250) fließen lässt.

5. System gemäß einem der vorhergehenden Ansprüche, das ferner einen Filter (190) beinhaltet, der in der ersten Fluidverbindungsleitung (101) positioniert ist.

6. System gemäß einem der vorhergehenden Ansprüche, wobei das System auf dem Unterwasser-E-Kreuz oder auf oder in einem Manifold oder auf einem Skid angeordnet ist.

7. System gemäß einem der vorhergehenden Ansprüche, wobei das System getrennt von dem E-Kreuz-Fördersystem (300) angeordnet und fluidisch damit verbunden ist.

8. System gemäß einem der vorhergehenden Ansprüche, wobei die Druckerhöhungseinheit (160) eine batteriegetriebene Pumpe oder eine hydraulisch getriebene Pumpe ist und die Druckerhöhungseinheit (160) rückholbar ist.

9. System gemäß einem der vorhergehenden Ansprüche, wobei die erste Fluidquelle (200) eine Versorgungsleitung ist.

10. Ein Verfahren zur Absperrungsprüfung mit dem System gemäß einem der vorhergehenden Ansprüche 2 bis 9 zur Prüfung mit einem Prüfdruck über einem Druck der Lagerstätte (400), wobei das Verfahren **dadurch gekennzeichnet ist, dass** es Folgendes beinhaltet:
Öffnen der ersten Armatur (110), Öffnen der zweiten Armatur (120), Schließen der dritten Armatur (130), Schließen der vierten Armatur (140) und Verwenden der Druckerhöhungseinheit (160) zum Erhöhen des Fluidprüfdrucks in der Fluidleitung (330) auf den gewünschten Absperrungsprüfdruckwert unter Verwendung von Fluid von der ersten Quelle (200).

11. Ein Verfahren zur Absperrungsprüfung mit dem System gemäß einem der vorhergehenden Ansprüche 2 bis 9 zur Prüfung mit einem Prüfdruck unter einem Druck der Lagerstätte (400), wobei das Verfahren **dadurch gekennzeichnet ist, dass** es Folgendes beinhaltet:
Schließen der ersten Armatur (110), Öffnen der dritten Armatur (130) und Verwenden der Fluidaufnahmeeinheit (170) zum Reduzieren des Fluiddrucks in der Fluidleitung (330) auf den gewünschten Absperrungsprüfdruckwert; alternativ Schließen der zweiten Armatur (120), Schließen der vierten Armatur (140), Öffnen der dritten Armatur (130) und Verwenden der Fluidaufnahmeeinheit (170) zum Reduzieren des Fluiddrucks in der Fluidleitung (330) auf den gewünschten Absperrungsprüfdruckwert.

12. Verfahren gemäß Anspruch 10, wobei das Verfahren zur Absperrungsprüfung eines Hauptschiebers (320), wobei der Hauptschieber die stromaufwärts gelegene Absperrarmatur (320) ist, ferner Folgendes beinhaltet: Schließen des Hauptschiebers (320), Öffnen der ersten Armatur (110), Öffnen der zweiten Armatur (120), Schließen der dritten Armatur (130), Schließen der vierten Armatur (140), Schließen der stromabwärts gelegenen Absperrarmatur (310) und Verwenden der Druckerhöhungseinheit (160) zum Erhöhen des Fluidprüfdrucks auf den gewünschten Absperrungsprüfdruckwert für den Hauptschieber (320), Halten des Drucks für eine vorgegebene Zeitdauer und Überprüfen der Drucküberwachungsvorrichtungen (380) in der Fluidleitung (330), um Druckänderungen zu detektieren.

13. Verfahren gemäß Anspruch 10, wobei das Verfahren zur Absperrungsprüfung eines Seitenschiebers (310), wobei der Seitenschieber die stromabwärts gelegene Absperrarmatur (310) ist, ferner Folgendes beinhaltet: Schließen des Seitenschiebers (310), Öffnen der ersten Armatur (110), Öffnen der zweiten Armatur (120), Schließen der dritten Armatur (130), Schließen der vierten Armatur (140), Schließen der stromaufwärts gelegenen Absperrarmatur (320) und Verwenden der Druckerhöhungseinheit (160) zum Erhöhen des Fluidprüfdrucks auf den gewünschten Absperrungsprüfdruckwert für den Seitenschieber (310), Halten des Drucks für eine vorgegebene Zeitdauer und Überprüfen der Drucküberwachungsvorrichtungen (380) in der Fluidleitung (330), um Druckänderungen zu detektieren.

14. Verfahren gemäß einem der vorhergehenden Ansprüche 10 bis 13, wobei das Verfahren ferner Folgendes beinhaltet: anfängliches Spülen des Systems durch Öffnen der ersten Armatur (110), Schließen der zweiten Armatur (120), Schließen der dritten Armatur (130), Öffnen der vierten Armatur (140) und Ablassen über das E-Kreuz (300) oder über einen Ringraum der Lagerstätte (400).

15. Verfahren gemäß einem der vorhergehenden Ansprüche 10 bis 14, wobei die Druckerhöhungseinheit (160) Fluid von der ersten Fluidquelle (200) verwendet, wobei die erste Fluidquelle eine Versorgungsleitung (200) ist.

## Revendications

1. Système pour tester une capacité d'arrêt d'un système de production formant arbre de Noël (300), où l'arbre de Noël est sous-marin et comprend une conduite de fluide (330) entre un ensemble de deux vannes d'arrêt (310, 320), l'une des vannes d'arrêt de l'ensemble de deux vannes d'arrêt étant une vanne d'arrêt en amont (320) plus proche d'un réservoir (400) et l'autre vanne d'arrêt étant une vanne d'arrêt en aval (310) plus proche d'un environnement, et un dispositif de surveillance de pression (380) dans la conduite de fluide (330) et un dispositif de surveillance de pression (180) en aval de la vanne d'arrêt en aval (310), le système fournissant du fluide à différentes pressions de test à la conduite de fluide (330) entre la vanne d'arrêt en aval (310) et la vanne d'arrêt en amont (320), **caractérisé en ce que** le système comprend
une première conduite de raccordement de fluide (101) allant d'une source de fluide (200) à une unité d'augmentation de pression (160), avec une première vanne (110) positionnée dans la première conduite de raccordement de fluide (101) ;
une deuxième conduite de raccordement de fluide (102) allant de l'unité d'augmentation de pression (160) à un premier point de raccordement (332) sur la conduite de fluide (330) entre la vanne d'arrêt en aval (310) et la vanne d'arrêt en amont (320), avec une deuxième vanne (120) positionnée dans la deuxième conduite de raccordement de fluide (102) ; et
une troisième conduite de raccordement de fluide (103) allant d'une unité de réception de fluide (170) à un deuxième point de raccordement (122) sur la deuxième conduite de raccordement de fluide (102), le deuxième point de raccordement (122) étant entre la deuxième vanne (120) et le premier point de raccordement (332), avec une troisième vanne (130) positionnée dans la troisième conduite de raccordement de fluide (103), de telle sorte que du fluide aux différentes pressions de test peut être fourni à la conduite de fluide (330) entre les vannes d'arrêt (310, 320) pour le test des vannes d'arrêt (310, 320).

2. Le système selon la revendication 1, comprenant en outre une quatrième conduite de raccordement de fluide (104) allant d'un troisième point de raccordement (112) au deuxième point de raccordement (122), le troisième point de raccordement (112) étant sur la première conduite de raccordement (101) et entre l'unité d'augmentation de pression (160) et la première vanne (110), avec une quatrième vanne (140) positionnée dans la quatrième conduite de raccordement de fluide (104).

3. Le système selon la revendication 1 ou 2, où l'unité d'augmentation de pression (160) comprend une pompe pour pomper du fluide dans une seule direction allant de la pompe (160) vers la deuxième vanne (120).

4. Le système selon l'une quelconque des revendications précédentes, comprenant en outre une conduite de vidange de raccordement de fluide (162) allant de l'unité d'augmentation de pression (160) à une conduite d'écoulement de production (250), avec un clapet anti-retour (164) positionné dans la conduite de vidange de raccordement de fluide (162) permettant uniquement au fluide de s'écouler en allant du dispositif d'augmentation de pression (160) à la conduite d'écoulement de production (250).

5. Le système selon l'une quelconque des revendications précédentes, comprenant en outre un filtre (190) positionné dans la première conduite de raccordement de fluide (101).

6. Le système selon l'une quelconque des revendications précédentes, où le système est agencé sur l'arbre de Noël sous-marin, ou sur ou dans un collecteur, ou sur un patin.

7. Le système selon l'une quelconque des revendications précédentes, où le système est agencé séparément du système de production formant arbre de Noël (300) et raccordé fluidiquement à celui-ci.

8. Le système selon l'une quelconque des revendications précédentes, où l'unité d'augmentation de pression (160) est une pompe entraînée par batterie, ou une pompe entraînée hydrauliquement, et l'unité d'augmentation de pression (160) est récupérable.

9. Le système selon l'une quelconque des revendications précédentes, où la première source de fluide (200) est une conduite de service.

10. Procédé pour tester une capacité d'arrêt avec le système selon l'une quelconque des revendications précédentes 2 à 9, pour un test avec une pression de test supérieure à une pression du réservoir (400), le procédé étant **caractérisé en ce qu'**il comprend le fait :
d'ouvrir la première vanne (110), d'ouvrir la deuxième vanne (120), de fermer la troisième vanne (130), de fermer la quatrième vanne (140), et d'utiliser l'unité d'augmentation de pression (160) pour augmenter la pression de test de fluide dans la conduite de fluide (330) à la valeur de pression de test de capacité d'arrêt souhaitée, en utilisant du fluide provenant de la première source (200).

11. Procédé pour tester une capacité d'arrêt avec le système selon l'une quelconque des revendications précédentes 2 à 9, pour un test avec une pression de test inférieure à une pression du réservoir (400), le procédé étant **caractérisé en ce qu'**il comprend le fait :
de fermer la première vanne (110), d'ouvrir la troisième vanne (130), et d'utiliser l'unité de réception de fluide (170) pour réduire la pression de fluide dans la conduite de fluide (330) à la valeur de pression de test de capacité d'arrêt souhaitée ; sinon de fermer la deuxième vanne (120), de fermer la quatrième vanne (140), d'ouvrir la troisième vanne (130), et d'utiliser l'unité de réception de fluide (170) pour réduire la pression de fluide dans la conduite de fluide (330) à la valeur de pression de test de capacité d'arrêt souhaitée.

12. Le procédé selon la revendication 10, où pour tester une capacité d'arrêt d'une vanne maîtresse (320), la vanne maîtresse étant la vanne d'arrêt en amont (320), le procédé comprend en outre le fait de fermer la vanne maîtresse (320), d'ouvrir la première vanne (110), d'ouvrir la deuxième vanne (120), de fermer la troisième vanne (130), de fermer la quatrième vanne (140), de fermer la vanne d'arrêt en aval (310), et d'utiliser l'unité d'augmentation de pression (160) afin d'augmenter la pression de test de fluide à la valeur de pression de test de capacité d'arrêt souhaitée pour la vanne maîtresse (320), de maintenir la pression pendant une période de temps prédéterminée et de vérifier les dispositifs de surveillance de pression (380) dans la conduite de fluide (330) pour détecter des changements de pression.

13. Le procédé selon la revendication 10, où pour tester une capacité d'arrêt d'une vanne latérale (310), la vanne latérale étant la vanne d'arrêt en aval (310), le procédé comprend en outre le fait de fermer la vanne latérale (310), d'ouvrir la première vanne (110), d'ouvrir la deuxième vanne (120), de fermer la troisième vanne (130), de fermer la quatrième vanne (140), de fermer la vanne d'arrêt en amont (320), et d'utiliser l'unité d'augmentation de pression (160) afin d'augmenter la pression de test de fluide à la valeur de pression de test de capacité d'arrêt souhaitée pour la vanne latérale (310), de maintenir la pression pendant une période de temps prédéterminée et de vérifier les dispositifs de surveillance de pression (380) dans la conduite de fluide (330) pour détecter des changements de pression.

14. Le procédé selon l'une quelconque des revendications précédentes 10 à 13, où le procédé comprend en outre le fait de rincer initialement le système par le fait d'ouvrir la première vanne (110), de fermer la deuxième vanne (120), de fermer la troisième vanne (130), d'ouvrir la quatrième vanne (140), et de purger via l'arbre de Noël (300) ou via un espace annulaire du réservoir (400).

15. Le procédé selon l'une quelconque des revendications précédentes 10 à 14, où l'unité d'augmentation de pression (160) utilise du fluide provenant de la première source de fluide (200), la première source de fluide étant une conduite de service (200).
